# EUROPEAN PATENT APPLICATION

(11) **EP 4 271 127 A1**
(43) Date of publication of application: **01.11.2023**
(21) Application number: 21927815.7
(22) Date of filing: 25.02.2021
(51) Int. Cl.: H04W 92/18, H04W 76/10

(54) **COMMUNICATION DEVICE, COMMUNICATION METHOD, AND PROGRAM**

(71) Applicant: HONDA MOTOR CO., LTD., Minato-ku Tokyo 107-8556 (JP)
(72) Inventor: IMAI, Naoko, Tokyo 107-8556 (JP); OI, Yusuke, Tokyo 107-8556 (JP)
(74) Representative: Weickmann & Weickmann PartmbB
(86) International application number: PCT/JP2021/006981
(87) International publication number: WO 2022/180713

(57) **Abstract**

A communication device performs connection establishment processing with another communication device that relays communication with a predetermined communication device, and when transmitting a request for a connection to the another communication device, transmits, to the another communication device, together with the request, first data that is a part of data to be transmitted to the predetermined communication device and information indicating a condition for the another communication device to discard the first data.

## Description

### TECHNICAL FIELD

The present invention relates to a communication device, a communication method, and a program, and more particularly, to a data transmission control technique.

### BACKGROUND ART

Vehicle-to-Everything (V2X) communication, by which a vehicle communicates wirelessly with another vehicle or an object, enables the vehicle to acquire various types of information or to provide information to others. When a vehicle transmits data to a device such as a server on the Internet or a network that has been constructed by a service provider, the vehicle has to connect to a predetermined communication device such as, for example, a base station or an access point through which the vehicle is capable of connecting to the network. However, vehicles are not always in an environment where the connection to such a predetermined communication device is executable. For this reason, it is supposed that a vehicle communicates with a predetermined communication device through, for example, another vehicle capable of connecting to such a predetermined communication device. PTL 1 describes a configuration for connecting between vehicles to transfer data to a predetermined node. In PTL 1, a vehicle close to the predetermined node is identified by communication between the vehicles, and data is transferred to the vehicle close to the predetermined node.

### CITATION LIST

### PATENT LITERATURE

PTL 1: Japanese Patent Laid-Open No. 2017-184051

### SUMMARY OF INVENTION

### TECHNICAL PROBLEM

By establishing a connection with another communication device that is a communication partner before transferring data, a communication device becomes capable of performing a large volume of data communication. However, in a case where the communication device and another communication device are vehicles, it is also supposed that the communication environment is not stable because these vehicles move, and it is not possible to establish a connection. In addition, a communication environment from another communication device to a predetermined communication device such as a base station or an access point is not always stable. Hence, even though a connection between the communication device and another communication device can be established, the communication environment between such another communication device and the predetermined communication device may not be stable. In this case, another communication device may not be capable of accepting a connection request that presupposes relaying. In this manner, depending on the environment of the communication device or another communication device that performs relay transmission, the communication device cannot establish a connection or transfer data due to a change of the communication environment or the like, and convenience of communication may be degraded.

The present invention provides a technique for improving convenience of communication.

### SOLUTION TO PROBLEM

A communication device according to one aspect of the present invention is a communication device comprising: performing means for performing connection establishment processing with another communication device that relays communication with a predetermined communication device, wherein when transmitting a request for a connection to the another communication device, the performing means transmits, to the another communication device, together with the request, first data that is a part of data to be transmitted to the predetermined communication device and information indicating a condition for the another communication device to discard the first data.

### ADVANTAGEOUS EFFECTS OF INVENTION

According to the present invention, the convenience of communication can be improved.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram illustrating a system configuration example.
FIG. 2 is a diagram illustrating a hardware configuration example of a communication device.
FIG. 3 is a diagram illustrating a functional configuration example of the communication device.
FIG. 4 is a diagram illustrating an example of a flow of processing performed in the system.
FIG. 5 is a diagram illustrating an example of a flow of processing performed in the system.
FIG. 6 is a diagram illustrating an example of a flow of processing performed in the system.

### DESCRIPTION OF EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### (System Configuration)

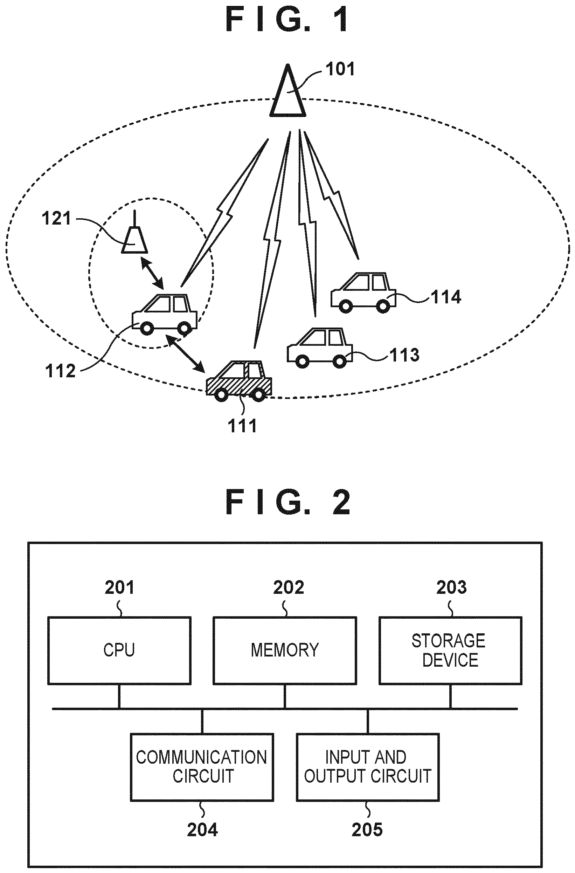

FIG. 1 illustrates a configuration example of a system in the present embodiment. The present system is a wireless communication system in which vehicles 111 to 114, which are capable of performing wireless communication, connect to a predetermined network such as the Internet, and perform communication. The vehicles 111 to 114 according to the present embodiment connect to a base station 101 of a cellular communication system, for example, and perform communication with a predetermined communication device. In addition, the vehicles 111 to 114 are, for example, configured to be capable of communicating with each other by connecting to each other in a communication method different from the cellular communication method for communicating with the base station 101. Here, the communication method different from the cellular communication method is, for example, any communication method of cellular Vehicle-to-Everything (V2X), wireless LAN, Dedicated Short Range Communications (DSRC), and Bluetooth (registered trademark). Note that although the cellular V2X is one aspect of the cellular communication method, it is not used for the communication between the base station and the terminal (that is, the vehicle 111 to the vehicle 114), but is used for the communication between a device other than the base station and the terminal (the vehicle 111 to the vehicle 114). Therefore, these communication methods are treated as different communication methods throughout the present embodiment and the scope of claims. Note that a combination of the cellular communication method and any other communication method is an example, and the vehicles 111 to 114 are configured to connect to a first device such as the base station 101 in a first communication method, and to be connectable with each other in a second communication method different from the first communication method. Note that in FIG. 1, only one base station 101 and four vehicles 111 to 114 are illustrated, but it is needless to say that a large number of these devices can be present.

By using the second communication method, the vehicles 111 to 114 are capable of performing, for example, not only vehicle-to-vehicle communication but also communication with another device such as, for example, an access point of a wireless LAN. In one example, it is assumed that the vehicle 112 is present in a location where it is possible to communicate with another device 121 is fixed and is for a communication method other than the cellular communication method. In addition, the vehicle 113 and the vehicle 114 are also capable of connecting to and communicating with surrounding devices depending on their locations. Note that FIG. 1 illustrates an example in which the vehicle 112 is directly connectable to another device 121, which is fixed, but there is no intention of being limited to this. For example, the vehicle 112 may be capable of communicating with such another device 121, which is fixed, through a wireless communication device such as further another vehicle. The same applies to other vehicles.

By performing cellular communication with the base station 101, the vehicles 111 to 114 are capable of transmitting, for example, information that has been acquired by sensors of the respective vehicles to a device such as a predetermined information processing server. The information processing server is capable of performing various types of processing such as control for automated driving with this information. In addition, by performing the cellular communication with the base station 101, the vehicles 111 to 114 are capable of acquiring various types of information such as driving control information and service information in accordance with the locations of the vehicles from a server that holds, for example, predetermined information. On the other hand, in an environment in which a large number of vehicles communicate in parallel, the communication capacity that can be provided by the base station 101 may be insufficient. For this reason, in the present embodiment, for example, the communication of the communication device (for example, the vehicle 112) connectable to the device 121 in a communication method, which is different from the cellular communication method, is performed with the device 121 so as to offload the communication. In addition, communication of the vehicle 111 is offloaded to another device through the other vehicles 112 to 114. Note that communication of the vehicle 113 and the vehicle 114 can be similarly offloaded through another vehicle or another device.

Here, focusing on the vehicle 111, the vehicle 111 can establish a connection with a vehicle in the surroundings and communicate with a predetermined communication device such as a server on the Internet through the connection. For this purpose, the vehicle 111 transmits a connection request for requesting another vehicle in the surroundings to relay the communication, and establishes a connection. At this time, the vehicle 111 can, for example, establish a connection with another vehicle having good wireless quality of communication with the vehicle 111 in the second communication method. However, even though the vehicle 111 performs connection establishment processing with the vehicle 112, for example, in a case where the vehicle 111 and the vehicle 112 are moving together, the communication environment may greatly change over time, and the connection cannot be established, in some cases. In such cases, when the vehicle 111 has to transmit data, it is not possible to establish a connection with another vehicle (for example, the vehicle 112), and it is not possible to transmit the data. In one example, in a case of controlling the vehicle, based on the data to be transmitted, it may not be possible to conduct such control, if it is not possible to transmit such data at all. For this reason, it is important to avoid a situation in which it is impossible to transmit data at all, as much as possible.

On the other hand, by the vehicle 111 transmitting data without establishing a connection, there can remain a possibility that a predetermined communication device can receive the data. However, in this case, when the vehicle 111 always transmits data without establishing a connection, the vehicle 111 does not establish a connection even in a state of being capable of establishing the connection. Hence, for example, when transmitting a large amount of data, it is not possible to communicate with sufficient frequency use efficiency. In contrast, when the vehicle 111 attempts to establish a connection but fails, the vehicle 111 is capable of transmitting data without establishing a connection. However, in this case, the time until data transmission is prolonged.

In the present embodiment, in consideration of such circumstances, in connection establishment processing with another vehicle (for example, the vehicle 112) that relays communication with a predetermined communication device such as a server on the Internet, when the vehicle 111 transmits a connection request to such another vehicle, the vehicle 111 transmits first data that is a part of transmission object data together with the request. Here, the first data includes at least information identifying a predetermined communication device as a destination and user data to be delivered to such a predetermined communication device. Then, when the connection establishment processing with another vehicle is successful, the vehicle 111 transmits second data different from the first data out of the transmission object data through the established connection to such another vehicle with which the connection has been established. Note that when the connection establishment processing with another vehicle fails, the vehicle 111 does not transmit the second data. According to this, the vehicle 111 is capable of transmitting, for example, a part of transmission object data that necessitates a real-time property in a state in which the connection is not established. When the connection is successfully established, the vehicle 111 is capable of transmitting the other part of the transmission object data that does not necessitate the real-time property through the established connection. According to this, the vehicle 111 is capable of using communication in a state in which the connection is not established and communication in a state in which the connection is established in an integrated manner, and is capable of promptly transmitting a small amount of data in a state where the connection cannot be established, and transmitting, for example, all of the transmission object data in high-speed and large-capacity communication in a state in which the connection can be established. Note that another vehicle can refuse the connection request from the vehicle 111, for example, in a case of not being in a situation capable of communicating with the predetermined communication device (for example, it is present outside a communicable range of the device 121). However, in such an occasion, such another vehicle receives the first data. In this case, such another vehicle that has received the first data can transmit the first data to the predetermined communication device in accordance with a situation in which data transmission to the predetermined communication device is executable.

Note that when transmitting the connection request, the vehicle 111 can further transmit the first data and information indicating a condition for another vehicle that has received the request to discard the first data. That is, a long time can elapse in a state in which another vehicle that has received the first data from the vehicle 111 does not become capable of transmitting the first data to the predetermined communication device. In this case, in another vehicle, data that is continuously held while being unable to transmit it can waste the storage capacity. In addition, even though the data that has been transmitted by the vehicle 111 becomes obsolete within a short period of time and arrives at a predetermined communication device after the time lapses, it can be supposed that the data is no longer useful. In consideration of such circumstances, the information indicating the condition includes, for example, information indicating expiration. Then, another vehicle that has received the first data discards the first data, based on the fact that the expiration has elapsed while being unable to transmit the first data. Note that the information indicating the expiration may be indicated by, for example, an elapsed time from a timing when the first data is transmitted, or may be indicated by information of a time counted by an internal clock. In addition, the information indicating the condition may include, for example, information indicating a geographical range. In this case, another vehicle that has received the first data can discard the first data, in a case of having moved beyond its geographic range while being unable to transmit the first data. Note that the information indicating these conditions may be used in combination. In addition, the vehicle 111 may transmit information indicating still another condition. The information indicating these conditions can prevent another vehicle from continuously holding the first data.

In one example, the vehicle 111 can perform the connection establishment processing for each of one or more other vehicles (another communication device) capable of relaying communication with a predetermined communication device. In this situation, for example, the vehicle 111 sequentially transmits a connection establishment request to each of other vehicles present in the surroundings. In this situation, in a case where there are a plurality of other vehicles to which a connection has not been attempted, the vehicle 111 can try not to transmit the first data or the information regarding the condition for discarding the first data. That is, in a case where there is only one another vehicle to which the connection has not been attempted, the vehicle 111 can transmit the first data and the information regarding the condition for discarding the first data together with the connection establishment request. In the other cases, the vehicle 111 can try not to transmit the first data or the information regarding the condition. For example, in a case where there is only one another vehicle capable of relaying the communication with a predetermined communication device in the surroundings, the vehicle 111 can transmit the connection request, the first data, and the information regarding the condition for discarding the first data to such another vehicle. On the other hand, for example, in a case where there are two other vehicles capable of relaying the communication with the predetermined communication device in the surroundings, the vehicle 111 transmits only a connection request to a first another vehicle. In a case where the connection request is rejected by the first another vehicle, the vehicle transmits the first data and the information regarding the condition for discarding the first data to a second another vehicle, when transmitting a connection request. In this manner, in a case where there is a high possibility of being incapable of establishing a connection with any of the other vehicles, the vehicle 111 transmits a part of the transmission object data and the information regarding the condition for discarding the part of the data, when transmitting the connection request. According to this, in a state of being capable of establishing the connection, the vehicle 111 becomes capable of establishing the connection and communicating as much as possible. Note that, for example, when the vehicle 111 transmits the connection request to a predetermined number of other vehicles, but fails in the connection, and even though there are further two or more other vehicles capable of relaying the communication with a predetermined communication device, the vehicle 111 may transmit the first data and the information regarding the condition for discarding the first data, when transmitting a connection request next. That is, before performing the connection establishment processing with all the other vehicles, the vehicle 111 may transmit the first data and the like together with the connection request. In addition, the vehicle 111 may transmit the first data and the like together with the connection request, based on the elapse of a predetermined period from when the connection establishment processing starts first. According to this, in a case where a large number of other vehicles are present, a large number of connection establishment processing can be prevented from being performed unnecessarily.

Note that when receiving, from another vehicle, a rejection message to the connection request that has been transmitted together with the first data, the vehicle 111 can consider that such another vehicle has received the first data. That is, the rejection message is not transmitted in a situation in which another vehicle is incapable of interpreting a connection request message. Thus, it can be considered that the first data has been received, as long as the rejection message is transmitted. The vehicle 111 may transmit the first data and the like when transmitting the connection request, until the vehicle 111 receives the rejection message to the connection request that has been transmitted together with the first data.

Note that it is supposed that the vehicle 111 periodically transmits data for predetermined control, for example. In this case, the vehicle 111 can transmit such data to be periodically transmitted, as the first data described above. In this situation, another vehicle that has received the first data can transfer the first data to the predetermined communication device, in accordance with a situation in which data transmission to the predetermined communication device is executable. For this reason, for example, the first data that has been transmitted earlier may arrive at a predetermined communication device after another first data that has been transmitted later. Therefore, the vehicle 111 may transmit information (for example, a serial number) corresponding to an order of the first data, so that the data can be sorted in a time-series manner when the predetermined communication device receives a plurality of pieces of first data. According to this, it becomes possible for the predetermined communication device to appropriately rearrange and use the plurality of received first data, in a case where the first data has a meaning in a time-series manner.

Note that in the above example, the description has been given by focusing on the vehicle 111. However, the vehicle 112 to the vehicle 114 are also capable of performing similar processing, when requesting another device to transfer data. Hereinafter, configurations and operations of the vehicle 111 to the vehicle 114 that perform such processing will be described.

### (Device Configuration)

FIG. 2 illustrates a hardware configuration example of the communication device provided in each the vehicle 111 to the vehicle 114 of the present embodiment. Note that FIG. 2 illustrates a configuration example of hardware of the part of the communication device according to the present embodiment, and illustrations of the other configurations such as configurations of the vehicle 111 to the vehicle 114 as vehicles are omitted. The communication device includes a general-purpose computer in one example, and the computer includes, for example, a CPU 201, a memory 202, a storage device 203, a communication circuit 204, and an input and output circuit 205. The CPU 201 executes, for example, a program stored in the memory 202 to perform processing to be described later and conduct control of the entire device. Note that the CPU 201 can be substituted by any one or more processors such as an MPU and an ASIC. The memory 202 holds a program for causing the communication device to perform various types of processing, and functions as a work memory at the time of executing the program. In one example, the memory 202 is a random access memory (RAM) or a read-only memory (ROM). The storage device 203 is, for example, a detachable external storage device, a built-in hard disk drive, or the like, and holds various types of information. The communication circuit 204 performs signal processing related to communication, acquires various types of information from an external device through a communication network, and transmits the various types of information to the external device. Note that the information that has been acquired by the communication circuit 204 can be stored in, for example, the memory 202 or the storage device 203. Note that the communication device can include a plurality of communication circuits 204. The input and output circuit 205 controls, for example, outputs of screen information to be displayed on a display device, not illustrated, audio information to be output from a speaker, and receiving of user inputs via a keyboard, a pointing device, or the like. Note that the input and output circuit 205 may control a device that integrally inputs into and outputs from a touch panel or the like. Note that the configuration of FIG. 2 is an example, and for example, the communication device may include dedicated hardware for performing the above-described processing.

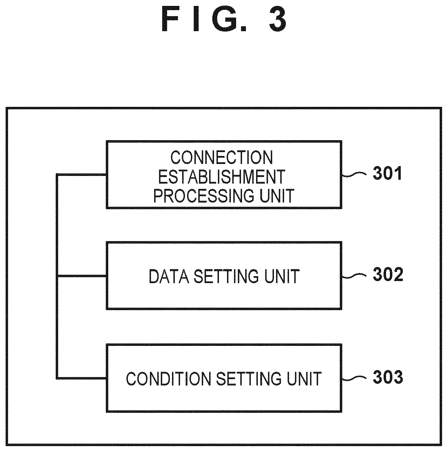

FIG. 3 illustrates a functional configuration example of the communication device provided in each the vehicle 111 to the vehicle 114 in the present embodiment. The communication device includes, for example, a connection establishment processing unit 301, a data setting unit 302, and a condition setting unit 303, as its functions. Note that these functional units may be implemented, for example, by the CPU 201 executing a program stored in the memory 202 or the storage device 203, or may be implemented by dedicated hardware.

The connection establishment processing unit 301 performs processing for establishing a connection with another communication device (another vehicle) that relays communication between the self-device and a predetermined communication device such as a server on the Internet. The connection establishment processing unit 301 transmits, for example, a connection establishment request to another device, and establishes a connection, based on receiving a response indicating that the establishment request has been accepted by such another device. Note that this connection establishment processing is performed in a procedure defined in the communication standards for use between the self-device and another device. However, in the present embodiment, a procedure by the connection establishment processing unit 301 for transmitting a connection establishment request message to another device is included in the connection processing. Note that in one example, the connection establishment processing may include a procedure for transmitting a response message to a message such as a connection request from another device. That is, in the connection establishment processing, it is assumed that a procedure for transmitting some kind of message to another device that is a connection target is inevitably included. Note that some kind of message transmitted in the connection establishment processing can be handled in a similar manner to the connection establishment request described above. That is, a part of the transmission object data and the information regarding the condition for discarding such data can be transmitted together with any of the messages.

The data setting unit 302 sets data to be transmitted to another device. The data setting unit 302 selects and sets data to be actually transmitted to another device out of the transmission object data. In one example, the data setting unit 302 can select information to be transmitted to a predetermined communication device at an early stage, such as information for controlling the vehicle, as the data to be transmitted together with the connection request. Note that in this timing, the data setting unit 302 selects data having a size that does not exceed a predetermined size, as the data to be transmitted together with the connection request. That is, the data setting unit 302 selects partial data having the size that does not exceed the predetermined size from the transmission object data, as the data to be transmitted together with the connection request. Note that the data setting unit 302 may divide predetermined transmission object data, may generate data that does not exceed a plurality of predetermined sizes, and may transmit partial data obtained by the division in every connection request. Note that, for example, the data setting unit 302 may generate information by which the order is identifiable (for example, a serial number or time information) for the divided data having an order or a meaning, and may set the information as attached information of the data. In addition, when the connection with another device is established by the connection establishment processing unit 301, for example, the data setting unit 302 makes a setting to transmit, to such another device, data different from the partial data, which has been transmitted together with the connection request, out of the transmission object data. In one example, the data setting unit 302 can set all the data that has not been transmitted during connection request processing, as the data to be transmitted after the connection is established.

In a case where the partial data is transmitted together with the transmission of the connection request, the condition setting unit 303 sets information regarding a condition for discarding the partial data by another device that has received the partial data. The information regarding the condition can include, for example, information of expiration or information of a geographical range.

Note that various options and the like about the processing when the communication device makes the connection request have been described above, and are not repeated here.

### (Flow of Processing)

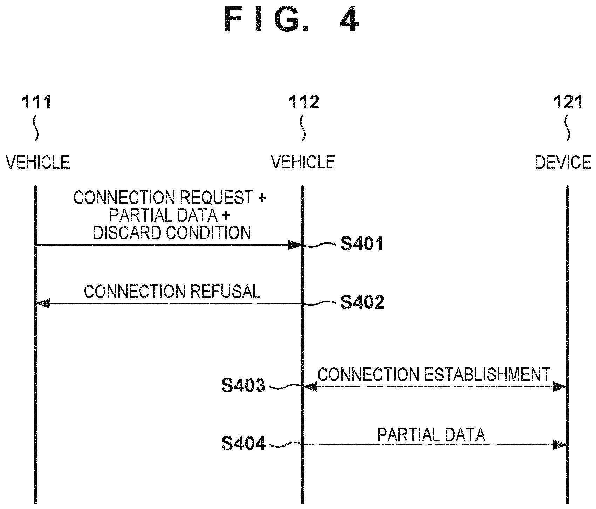

Next, an example of a flow of processing performed in the wireless communication system will be described with reference to FIGS. 4 to 6. Note that the description has been given with regard to details of the information transmitted and received in each processing procedure to be described later. Therefore, in the description here, only the flow of the processing is outlined, and the detailed description is not repeated. The present processing is implemented, for example, by the CPU 201 of a communication device provided in the vehicle 111 executing a program stored in the memory 202 or the storage device 203. Note that here, a description will be given with regard to a flow of processing when the vehicle 111 performs the connection establishment processing to make a relay request to the vehicle 112. However, this is an example, and similar processing can be performed, also when the vehicle 112 to the vehicle 114 or the like perform the connection establishment processing with another vehicle that is a connection target to make a relay request.

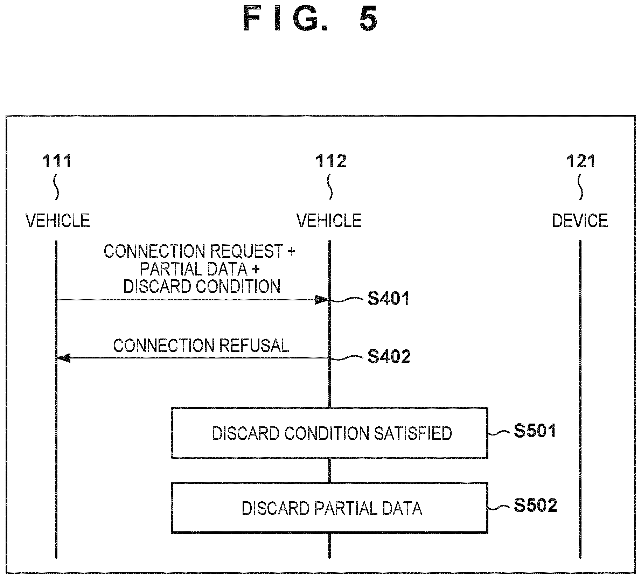

Note that in FIGS. 4 to 6, it is assumed that the vehicle 111 transmits a connection request to the vehicle 112, and in such an occasion, transmits partial data that is a part of the transmission object data and information regarding a condition on which the partial data should be discarded (S401). Then, in FIGS. 4 and 5, it is assumed that the vehicle 112 refuses the connection request because of, for example, a state in which it is not possible to establish the connection with the device 121 (S402). In this case, the vehicle 112 holds the partial data that has been received together with reception of the connection request and the information regarding the condition for discarding the partial data.

Thereafter, in FIG. 4, it is assumed that a connection with the device 121 has been established in accordance with, for example, the movement of the vehicle 112 to a location connectable to the device 121 (S403). When this connection is established, the vehicle 112 transmits the partial data that is held to the device 121 (S404). Accordingly, for example, it is possible to transmit the data that has been generated in the vehicle 111 and that should be transmitted to a predetermined communication device in a short period of time to the predetermined communication device (through the device 121) even though it is not possible to establish a connection.

On the other hand, in FIG. 5, it is assumed that while it is not possible to establish the connection with the device 121, the condition for discarding the data is satisfied, based on, for example, the expiration indicated as the condition having elapsed or the vehicle 112 having moved beyond a geographical range indicated as the condition (S501). In this case, the vehicle 112 discards the data without transferring the data to a predetermined communication device (S502). Accordingly, it is possible to prevent the vehicle 112 from continuously holding the data that has been received from the vehicle 111 for a long period of time unnecessarily.

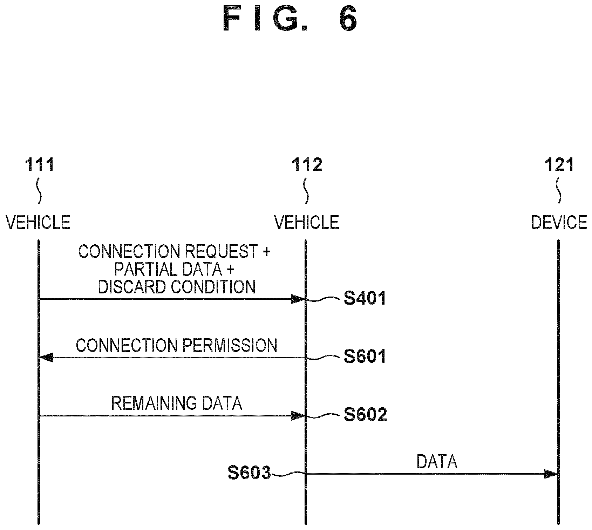

In FIG. 6, it is assumed that the vehicle 112 has accepted the connection request that has been received from the vehicle 111, and has permitted the connection (S601). Thereafter, various types of processing for establishing the connection are performed between the vehicle 111 and the vehicle 112. However, the processing is not illustrated in FIG. 6 in order to simplify the description. In this case, the vehicle 111 transfers, through the established connection, the remaining data different from the partial data transmitted in S401 out of the transmission object data to the vehicle 112 (S602). Then, the vehicle 112 transmits all the data that has been received to the device 121 with a predetermined communication device addressed as a destination, through the connection established with the device 121 (S603). In this manner, in a case where the vehicle 111 has successfully established a connection with the vehicle 112, which is capable of relaying the communication of itself, a relatively large amount of data can be transmitted in a stable communication environment.

In one example, the vehicle 111 can transmit data for an application that necessitates the real-time property in a state in which the connection has not been established at the time of transmitting the connection request, and may transmit data for an application that does not necessitate the real-time property in a state in which the connection has been established. The vehicle 111 can, for example, transmit data that has been gathered by sensors for automated driving together with the connection request, and may transmit data that does not necessitate promptness, such as data for maintenance of the vehicle, after the connection has been established. In this manner, by determining whether to transmit without waiting for the connection establishment or to transmit after the connection is established, depending on the use application of the data, a service using communication can be provided for a vehicle in an efficient manner.

### <Summary of Embodiments>

1. A communication device according to the present embodiments is:
   a communication device comprising:
   performing means for performing connection establishment processing with another communication device that relays communication with a predetermined communication device, wherein
   when transmitting a request for a connection to the another communication device, the performing means transmits, to the another communication device, together with the request, first data that is a part of data to be transmitted to the predetermined communication device and information indicating a condition for the another communication device to discard the first data.
   According to this embodiment, even though the communication device fails in establishing a connection with a partner device that relays communication with a predetermined communication device, the communication device is capable of transmitting a part of the transmission object data to the partner device. Then, in a case where the partner device becomes capable of transmitting the part of the data to the predetermined communication device, the part of the data is transmitted, so that the communication from the communication device to the predetermined communication device can be completed. On the other hand, in a case where the partner device does not become capable of transmitting the data to the predetermined communication device, the partner device can discard the part of the data that has been received, based on the condition for discarding the data. Accordingly, it is possible to prevent the partner device from holding data over a long period of time, although data transmission to a predetermined communication device is not executable, and waste of the storage capacity can be prevented.
2. In the embodiment according to 1 above,
   in a case where the connection with the another communication device based on the request is successfully established, second data out of the data to be transmitted to the predetermined communication device is transmitted to the another communication device, the second data being different from the first data.
   According to this embodiment, in a situation in which it is possible to establish a connection with the partner device, not only a part of the transmission object data but also all the transmission object data can be transmitted.
3. In the embodiment according to 2 above,
   in a case where the connection with the another communication device based on the request is not successfully established, the second data out of the data to be transmitted to the predetermined communication device is not transmitted to the another communication device.
   According to this embodiment, in an environment in which it is not possible to establish a connection with the partner device, for example, only the data that necessitates a real-time property can be transmitted. With regard to the data the transmission of which can be held, such as the data that does not have the real-time property, it can be transmitted at a later opportunity.
4. In the embodiment according to any one of 1 to 3 above,
   in a case where second another communication device capable of relaying the communication with the predetermined communication device is not present, the performing means transmits the request, the first data, and the information indicating the condition to the another communication device, wherein the second another communication device is different from the another communication device.
   According to this embodiment, in a case where there is no another device capable of relaying communication with a predetermined communication device, additional data is transmitted together with a connection request. Therefore, in a case where it is possible to establish a connection with another device that enables relaying, additional data can be prevented from being unnecessarily transmitted when a connection request is transmitted. Accordingly, degradation in frequency use efficiency can be suppressed.
5. In the embodiment according to 4 above,
   in a case where the second another communication device is present, and in a state of not having transmitted the request to the second another communication device, the performing means transmits the request to the another communication device, and transmits neither the first data nor the information indicating the condition to the another communication device.
   According to this embodiment, in a case where there is a possibility of establishing a connection with another device that enables relaying, by giving priority to the establishment of a connection with the device, it is possible to prevent unnecessary transmission of additional data at the time of transmitting a connection request. Accordingly, degradation in frequency use efficiency can be suppressed.
6. In the embodiment according to 4 or 5 above,
   in a case where one or more second another communication devices are present, and in a state in which the request is transmitted to each of the one or more second another communication devices and no connection is established, the performing means transmits the request, the first data, and the information indicating the condition to the another communication device.
   According to this embodiment, in a case where it is not possible to establish a connection with another device that enables relaying, data is transmitted together with a connection request. Therefore, the frequency of becoming a state of transmitting the data can be suppressed while the connection is not established, and degradation in frequency use efficiency can be suppressed.
7. In the embodiment according to any one of 1 to 6 above,
   the information indicating the condition includes information indicating expiration, and when the expiration has elapsed while the first data is not transmitted by the another communication device, the first data is discarded.
   According to this embodiment, in another communication device, data that has been received in addition to the connection request can be discarded after a lapse of a certain period of time. Therefore, it is possible to prevent the data from being continuously held while being unable to transmit the data to be addressed to a predetermined communication device.
8. In the embodiment according to any one of 1 to 7 above,
   the information indicating the condition includes information indicating a geographical range, and when the another communication device has moved beyond the geographical range while the first data is not transmitted, the first data is discarded.
   According to this embodiment, in another communication device, in a case of having moved beyond a predetermined range, the data that has been received can be discarded. Therefore, it is possible to prevent the data from being continuously held while being unable to transmit the data to be addressed to a predetermined communication device.
9. In the embodiment according to any one of 1 to 8 above,
   in a case of transmitting a plurality of the first data to one or more another communication devices, the performing means generates information corresponding to an order of each of the plurality of the first data, and transmits the information corresponding to the order to the another communication device together with the request.
   According to this embodiment, when data having a meaning in its order is transmitted, it becomes possible for a receiver to identify in which order the data has been transmitted. That is, in another communication device, it is unknown at which timing such data is transmitted to a predetermined communication device. For this reason, in a case where a plurality of pieces of data are transmitted to another communication device at a plurality of transmission timings, and then are transferred to a predetermined communication device, the predetermined communication device is capable of sorting the pieces of data that have been received, in a time-series manner.
10. In the embodiment according to any one of 1 to 9 above,
   the communication device and the another communication device are each a vehicle.
   According to this embodiment, for example, the communication device is capable of transmitting certain data to another vehicle while traveling, and is capable of causing the data to be transferred, when such another vehicle becomes capable of establishing a connection with a predetermined communication device.
11. A communication method according to the present embodiment is:
   a communication method performed by a communication device, the communication method comprising:
   performing connection establishment processing with another communication device that relays communication with a predetermined communication device, wherein
   in the connection establishment processing, when transmitting a request for a connection to the another communication device, transmitting to the another communication device, together with the request, first data that is a part of data to be transmitted to the predetermined communication device and information indicating a condition for the another communication device to discard the first data.
   According to this embodiment, even though the communication device fails in establishing a connection with a partner device that relays communication with a predetermined communication device, the communication device is capable of transmitting a part of the transmission object data to the partner device. Then, in a case where the partner device becomes capable of transmitting the part of the data to the predetermined communication device, the part of the data is transmitted, so that the communication from the communication device to the predetermined communication device can be completed. On the other hand, in a case where the partner device does not become capable of transmitting the data to the predetermined communication device, the partner device can discard the part of the data that has been received, based on the condition for discarding the data. Accordingly, it is possible to prevent the partner device from holding data over a long period of time, although data transmission to a predetermined communication device is not executable, and waste of the storage capacity can be prevented.
12. A program according to the present embodiment is:
   a program for causing a computer included in a communication device to perform connection establishment processing with another communication device that relays communication with a predetermined communication device, the program for causing the computer to:
   in the connection establishment processing, when transmitting a request for a connection to the another communication device, transmit to the another communication device, together with the request, first data that is a part of data to be transmitted to the predetermined communication device and information indicating a condition for the another communication device to discard the first data.
   According to this embodiment, even though the communication device fails in establishing a connection with a partner device that relays communication with a predetermined communication device, the communication device is capable of transmitting a part of the transmission object data to the partner device. Then, in a case where the partner device becomes capable of transmitting the part of the data to the predetermined communication device, the part of the data is transmitted, so that the communication from the communication device to the predetermined communication device can be completed. On the other hand, in a case where the partner device does not become capable of transmitting the data to the predetermined communication device, the partner device can discard the part of the data that has been received, based on the condition for discarding the data. Accordingly, it is possible to prevent the partner device from holding data over a long period of time, although data transmission to a predetermined communication device is not executable, and waste of the storage capacity can be prevented.

The invention is not limited to the foregoing embodiments, and various variations/changes are possible within the spirit of the invention.

## Claims

1. A communication device comprising:
performing means for performing connection establishment processing with another communication device that relays communication with a predetermined communication device, wherein
when transmitting a request for a connection to the another communication device, the performing means transmits, to the another communication device, together with the request, first data that is a part of data to be transmitted to the predetermined communication device and information indicating a condition for the another communication device to discard the first data.

2. The communication device according to claim 1, wherein in a case where the connection with the another communication device based on the request is successfully established, second data out of the data to be transmitted to the predetermined communication device is transmitted to the another communication device, the second data being different from the first data.

3. The communication device according to claim 2, wherein in a case where the connection with the another communication device based on the request is not successfully established, the second data out of the data to be transmitted to the predetermined communication device is not transmitted to the another communication device.

4. The communication device according to any one of claims 1 to 3, wherein in a case where second another communication device capable of relaying the communication with the predetermined communication device is not present, the performing means transmits the request, the first data, and the information indicating the condition to the another communication device, wherein the second another communication device is different from the another communication device.

5. The communication device according to claim 4, wherein in a case where the second another communication device is present, and in a state of not having transmitted the request to the second another communication device, the performing means transmits the request to the another communication device, and transmits neither the first data nor the information indicating the condition to the another communication device.

6. The communication device according to claim 4 or 5, wherein in a case where one or more second another communication devices are present, and in a state in which the request is transmitted to each of the one or more second another communication devices and no connection is established, the performing means transmits the request, the first data, and the information indicating the condition to the another communication device.

7. The communication device according to any one of claims 1 to 6, wherein the information indicating the condition includes information indicating expiration, and when the expiration has elapsed while the first data is not transmitted by the another communication device, the first data is discarded.

8. The communication device according to any one of claims 1 to 7, wherein the information indicating the condition includes information indicating a geographical range, and when the another communication device has moved beyond the geographical range while the first data is not transmitted, the first data is discarded.

9. The communication device according to any one of claims 1 to 8, wherein in a case of transmitting a plurality of the first data to one or more another communication devices, the performing means generates information corresponding to an order of each of the plurality of the first data, and transmits the information corresponding to the order to the another communication device together with the request.

10. The communication device according to any one of claims 1 to 9, wherein the communication device and the another communication device are each a vehicle.

11. A communication method performed by a communication device, the communication method comprising:
performing connection establishment processing with another communication device that relays communication with a predetermined communication device, wherein
in the connection establishment processing, when transmitting a request for a connection to the another communication device, transmitting to the another communication device, together with the request, first data that is a part of data to be transmitted to the predetermined communication device and information indicating a condition for the another communication device to discard the first data.

12. A program for causing a computer included in a communication device to perform connection establishment processing with another communication device that relays communication with a predetermined communication device, the program for causing the computer to:
in the connection establishment processing, when transmitting a request for a connection to the another communication device, transmit to the another communication device, together with the request, first data that is a part of data to be transmitted to the predetermined communication device and information indicating a condition for the another communication device to discard the first data.
